# EUROPEAN PATENT APPLICATION

(11) **EP 4 372 544 A1**
(43) Date of publication of application: **22.05.2024**
(21) Application number: 22841275.5
(22) Date of filing: 08.07.2022
(51) Int. Cl.: G06F 3/14, G06F 3/147

(54) **DISPLAY CONTROL METHOD AND APPARATUS**

(30) Priority: 15.07.2021 CN 202110802299
(71) Applicant: Vivo Mobile Communication Co., Ltd., Dongguan, Guangdong 523863 (CN)
(72) Inventor: YANG, Tingting, Hangzhou, Zhejiang 311121 (CN)
(74) Representative: Lavoix
(86) International application number: PCT/CN2022/104566
(87) International publication number: WO 2023/284639

(57) **Abstract**

This application discloses a display control method and apparatus, and pertains to the field of communication technologies. The method includes: receiving a first input; and displaying, in response to the first input, a partial image of a first image and a thumbnail of the first image upon determining that the first image satisfies a preset condition; where the preset condition satisfied by the first image includes at least one of the following: a width value of the first image is greater than a display width value of a display; and a height value of the first image is greater than a display height value of the display.

## Description

### CROSS-REFERENCE TO RELATED APPLICATIONS

This application claims priority to Chinese Patent Application No. 202110802299.2, filed in China on July 15, 2021, which is incorporated herein by reference in its entirety.

### TECHNICAL FIELD

This application belongs to the field of communications technologies, and specifically, relates to a display control method and apparatus.

### BACKGROUND

As electronic device displays are getting larger and image processing techniques such as screenshotting and image stitching are becoming more mature, the issue that an image cannot be displayed in its entirety on the display is more frequently found in electronic devices.

Currently, taking the display of a long image as an example, an electronic device typically scales down the long image based on the available pixel dimensions of the display screen. If a user wants to view the details of the long image, the user needs to zoom in on the long image and navigate the zoomed-in long image. However, during this process, it is easy to accidentally trigger the long image to return to its original reduced size, requiring the user to zoom in again, which can be cumbersome.

As can be seen, in the prior art, the operation for viewing an image that cannot be displayed in its entirety on the display is cumbersome.

### SUMMARY

An objective of embodiments of this application is to provide a display control method and apparatus to solve the problem of cumbersome operation for viewing an image that cannot be displayed in its entirety on the display.

According to a first aspect, an embodiment of this application provides a display control method, where the method includes:
receiving a first input; and
displaying, in response to the first input, a partial image of a first image and a thumbnail of the first image upon determining that the first image satisfies a preset condition; where
the preset condition satisfied by the first image includes at least one of the following: a width value of the first image is greater than a display width value of a display; and a height value of the first image is greater than a display height value of the display.

According to a second aspect, an embodiment of this application provides a display control apparatus, where the apparatus includes:
a first receiving module configured to receive a first input; and
a first display module configured to display, in response to the first input, a partial image of a first image and a thumbnail of the first image upon determining that the first image satisfies a preset condition; where
the preset condition satisfied by the first image includes at least one of the following: a width value of the first image is greater than a display width value of a display; and a height value of the first image is greater than a display height value of the display.

According to a third aspect, an embodiment of this application provides an electronic device, where the electronic device includes a processor, a memory, and a program or instructions stored in the memory and capable of running on the processor, and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communications interface, the communications interface is coupled to the processor, and the processor is configured to run a program or instructions to implement the method according to the first aspect.

According to a sixth aspect, a computer program/program product is provided. The computer program/program product is stored in a non-volatile storage medium, and the program/program product is executed by at least one processor to implement the steps of the method according to the first aspect.

According to a seventh aspect, an electronic device is provided, where the electronic device is configured to perform the steps of the method according to the first aspect.

In the embodiments of this application, when a first input is received, in response to the first input, a partial image of the first image and a thumbnail of the first image are displayed upon determining that the first image satisfies the preset condition. Compared to displaying the first image in the form of a thumbnail, displaying the partial image of the first image does not require the user to zoom in on the image. Additionally, the thumbnail of the first image serves as a guide for the user to view the complete image content of the first image, simplifying user operations.

### BRIEF DESCRIPTION OF DRAWINGS

FIG. 1 is a first flowchart of a display control method according to an embodiment of this application;
FIG. 2 is a first schematic diagram of a display screen according to an embodiment of this application;
FIG. 3 is a second schematic diagram of a display screen according to an embodiment of this application;
FIG. 4a is a third schematic diagram of a display screen according to an embodiment of this application;
FIG. 4b is a fourth schematic diagram of a display screen according to an embodiment of this application;
FIG. 4c is a fifth schematic diagram of a display screen according to an embodiment of this application;
FIG. 5 is a sixth schematic diagram of a display screen according to an embodiment of this application;
FIG. 6 is a second flowchart of a display control method according to an embodiment of this application;
FIG. 7 is a third flowchart of a display control method according to an embodiment of this application;
FIG. 8 is a structural diagram of a display control apparatus according to an embodiment of this application;
FIG. 9 is a first structural diagram of an electronic device according to an embodiment of this application; and
FIG. 10 is a second structural diagram of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The following specifically describes the display control method provided in the embodiments of this application through specific embodiments and application scenarios thereof with reference to the accompanying drawings.

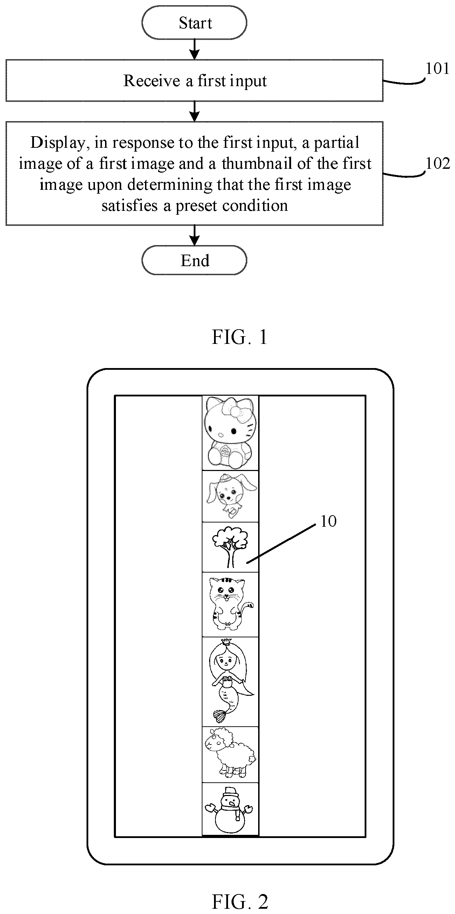

Referring to FIG. 1, FIG. 1 is a flowchart of a display control method according to an embodiment of this application. It should be noted that the display control method may be executed by an electronic device. Here, the display control method is described with the electronic device being the execution subject as an example.

As shown in FIG. 1, the method includes the following steps.

Step 101: Receive a first input.

During specific implementation, the first input may be any input for displaying the first image. Optionally, the first input includes three implementation forms: an input for triggering a photo-taking function; an input for triggering a screenshotting function; and an input for triggering an image viewing function. The specific descriptions of the foregoing three implementation forms are as follows:
In the first implementation form, the first input is an input for triggering the photo-taking function. In response to the first input, the camera of the electronic device captures the current preview image to generate and display the first image. In this implementation form, the first input may be a tap input, double-tap input, touch-and-hold input, slide input, or the like applied to the photo-taking function control or button, or may be a specific gesture input performed by the user. The specific input method can be determined based on the actual situation, which is not limited in the embodiments of this application.

In the second implementation form, the first input is an input for triggering the screenshotting function. In response to the first input, the current page is captured to generate and display the first image. In this implementation form, the first image may be a partial image of the target page displayed on the display screen, or may be an entire image of the target page obtained through functions such as scrolling screenshotting or long image screenshotting. The first input may be a tap input, double-tap input, touch-and-hold input, slide input, or the like applied to the screenshotting function control or button, or may be a specific gesture input performed by the user. The specific input method can be determined based on the actual situation, which is not limited in the embodiments of this application.

In the third implementation form, the first input is an input for triggering the image viewing function. In response to the first input, a pre-generated first image is displayed. In this implementation form, the first image may be an image obtained in advance through taking a photo or screenshot, or may be an image obtained in advance by stitching, editing, or cropping a plurality of images, which is not limited herein. The first input may be a tap input, double-tap input, touch-and-hold input, slide input, or the like applied to a thumbnail of the first image or a file identifier of the first image, or may be a specific gesture input performed by the user. The specific input method can be determined based on the actual situation, which is not limited in the embodiments of this application.

Step 102: Display, in response to the first input, a partial image of a first image and a thumbnail of the first image upon determining that the first image satisfies a preset condition.

The preset condition satisfied by the first image includes at least one of the following: a width value of the first image is greater than a display width value of a display; and a height value of the first image is greater than a display height value of the display.

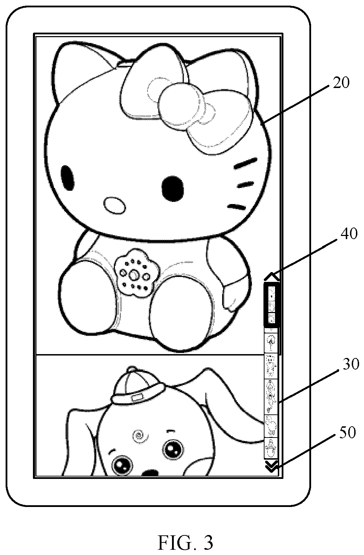

In this embodiment of this application, the electronic device can determine a display method of the first image based on whether the first image satisfies a preset condition. Specifically, that the first image satisfies a preset condition may be understood as: a dimension value of the first image in at least one direction exceeds the display value of the display of the electronic device in that direction, making it impossible for the display of the electronic device to display the first image in its entirety. In this case, in the related art, as shown in FIG. 2, the electronic device can display a thumbnail of the first image 10. In this embodiment of this application, as shown in FIG. 3, the electronic device can display a partial image 20 of the first image on the current display screen, and simultaneously display a thumbnail 30 of the first image. This allows users to clearly view the content of the partial image of the first image, and view the complete image content of the first image guided by the thumbnail of the first image.

It should be noted that in a case that width and height of the display of the electronic device are not equal, whether the first image satisfies the preset condition can be determined in two cases. In the first case, the electronic device displays the first image in a portrait mode, and the preset condition satisfies at least one of the following: a width value of the first image is greater than a display width value of a shorter side of a display; and a height value of the first image is greater than a display height value of a longer side of the display. In the second case, the electronic device displays the first image in a landscape mode, and the preset condition satisfies at least one of the following: a width value of the first image is greater than a display width value of a longer side of a display; and a height value of the first image is greater than a display height value of a shorter side of the display. Here, the case in which width and height of the display of the electronic device are not equal and the electronic device displays the first image in a portrait mode is taken as an example for illustration.

During specific implementation, when receiving the first input, the electronic device can first obtain the width and height values of the first image. Then, based on the width and height values of the first image, the electronic device can determine whether the first image satisfies the preset condition.

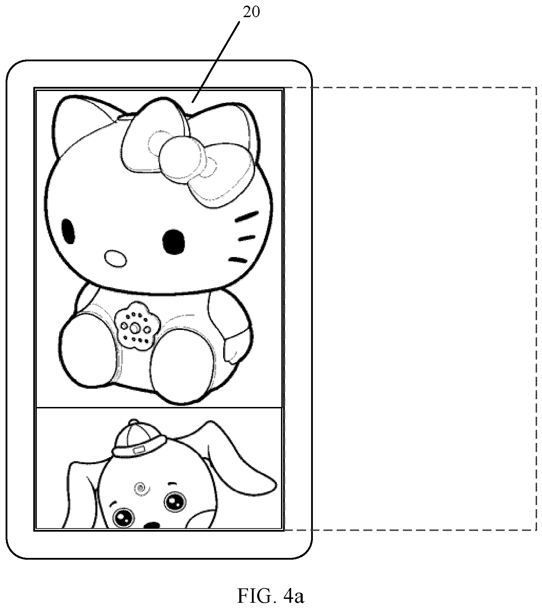

The three cases in which the first image satisfies the preset condition are described as follows:
In a first case, the width value of the first image is greater than the display width value of the display. In this case, the first image can be displayed in its entirety in the height direction and cannot be displayed in its entirety in the width direction, resulting in the display of only a partial image. For example, as shown in FIG. 4a, when the first image is displayed for the first time, the partial image 20 displayed on the display screen can be the end image of the first end of the first image in the width direction, with the partial image 20 being displayed in its entirety in the height direction. Optionally, a thumbnail of the first image may be displayed in a left region or a right region of the display.

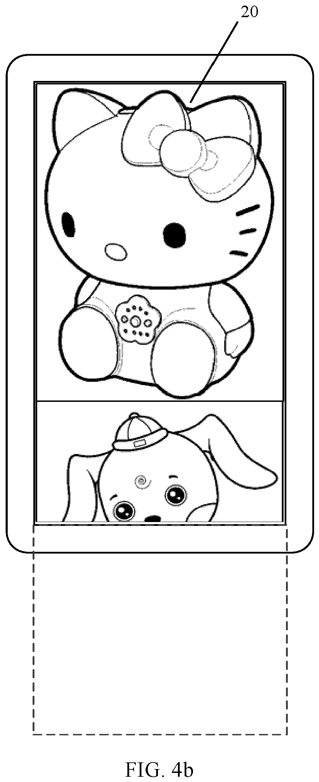

In a second case, a pixel height value of the first image is greater than the display height value of the display. In this case, the first image can be displayed in its entirety in the width direction and cannot be displayed in its entirety in the height direction, resulting in the display of only a partial image. For example, as shown in FIG. 4b, when the first image is displayed for the first time, the partial image 20 displayed on the display screen can be the end image of the first end of the first image in the height direction, with the first image being displayed in its entirety in the width direction. Optionally, a thumbnail of the first image may be displayed in an upper region or a lower region of the display.

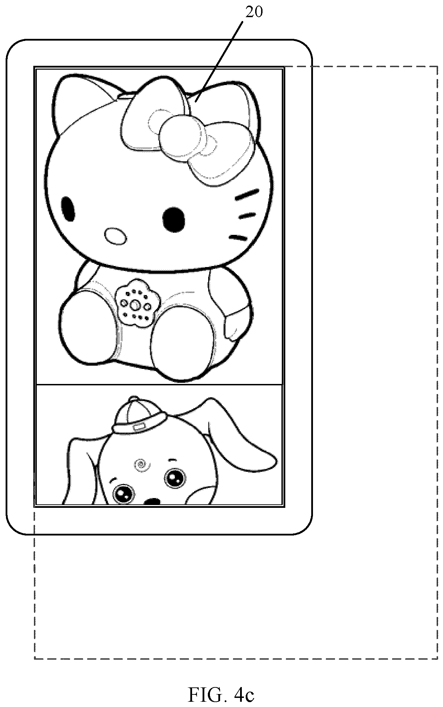

In a third case, a pixel width value of the first image is greater than the display width value of the display; and a pixel height value of the first image is greater than the display height value of the display. In this case, the first image cannot be displayed in its entirety in both the width direction and the height direction, resulting in the display of only a partial image. For example, as shown in FIG. 4c, when the first image is displayed for the first time, the partial image 20 displayed on the display screen can be the end image of the first end of the first image in the width and height direction, that is, the diagonal direction, with the first image being displayed not in its entirety in both the width and height direction. Optionally, a thumbnail of the first image may be displayed in an upper left region or a lower right region of the display.

It should be noted that the partial image may not necessarily be any end image of the first image. For example, the partial image may be a partial image of the center region of the first image. The specific arrangement can be determined based on the actual situation, which is not limited in the embodiments of this application.

The thumbnail of the first image may be displayed side by side with the partial image, that is, the thumbnail of the first image not overlapping with the partial image. In an optional implementation form, in response to the first input, when it is determined that the first image satisfies the preset condition, the electronic device can display a first window and a second window. The first window is used to display the partial image, and the second window is used to display the thumbnail of the first image. As shown in FIG. 3, the thumbnail 30 of the first image may also cover part of the region of the partial image 20. The specific arrangement can be determined based on the actual situation, which is not limited in the embodiments of this application.

In an optional implementation form, the electronic device may determine whether the preset condition is satisfied based on the pixel dimensions of the first image and the resolution of the display of the electronic device. Optionally, this may be determined as follows:
(1) A display height to width ratio (PH/PW) or a display width to height ratio (PW/PH) of the display is determined. For example, if a resolution of the display of the electronic device is 2376 * 1080, then PH/PW = 2376/1080 = 2.2 and PW/PH = 1080/2376 = 0.45 for portrait mode.
(2) In a case that the pixel width value of the first image is small, for example, the pixel dimensions of the first image are 4032 * 3024, the electronic device can display the first image in its entirety in the width direction, that is, the pixel value W' allowed by the display for displaying the first image in the width direction is: W' = 3024. Based on the display height to width ratio (PH/PW = 2.2) of the display, the pixel value H' allowed by the display for displaying the first image in the height direction is: H' = (PH/PW) * W'= 3024 * 2.2 = 6652.8. Since the pixel height value of the first image is 4032, and 4032 < 6652.8, which indicates that the height value of the first image is less than the display height value of the display, the first image can also be displayed in its entirely in the height direction. Therefore, the first image does not satisfy the preset condition. If the pixel height value of the first image is greater than the pixel value H' allowed by the display for displaying the first image in the height direction, which indicates that the height value of the first image is greater than the display height value of the display, the first image cannot be displayed in its entirety in the height direction. Therefore, the first image satisfies the preset condition.

In a case that the pixel height value of the first image is small, for example, the pixel dimensions of the first image are 3872 * 10750, the electronic device can display the first image in its entirety in the height direction, that is, the pixel value H' allowed by the display for displaying the first image in the height direction is: H' = 3872. Based on the display height to width ratio (PH/PW = 2.2) of the display, the pixel value W' allowed by the display for displaying the first image in the width direction is: W' = (PW/PH) * H' = 3872 * 0.45=1742.4. Since the pixel width value of the first image is 10750, and 10750 > 1742.4, which indicates that the width value of the first image is greater than the display width value of the display, the first image cannot be displayed in its entirely in the width direction. Therefore, the first image satisfies the preset condition.

In the display control method provided in embodiments of this application, upon receiving a first input, in response to the first input, the electronic device displays a partial image of a first image and a thumbnail of the first image upon determining that the first image satisfies the preset condition. Compared to displaying the first image in the form of a thumbnail, displaying a partial image of the first image allows the user to view the content of the partial image of the first image clearly without the need to zoom in on the image. Additionally, the thumbnail of the first image serves as a guide for the user to view the complete image content of the first image, simplifying user operations and enabling users to view clear image content.

In the embodiments of this application, optionally, the thumbnail of the first image is displayed as a floating control; and after the receiving a first input, the method further includes:
displaying, in response to the first input, a first control and a second control; where
in a case that the partial image is an end image of a first end of the first image, the first control is in a first display state; and in a case that the partial image is not the end image of the first end of the first image, the first control is in a second display state, and when in the second display state, the first control is used to control the partial image to switch in a direction from a second end to the first end, the first end and the second end being two opposite ends; and
in a case that the partial image is an end image of the second end of the first image, the second control is in a third display state; and in a case that the partial image is not the end image of the second end of the first image, the second control is in a fourth display state; and when in the fourth display state, the second control is used to control the partial image to switch in a direction from the first end to the second end.

In this embodiment, the electronic device displays the thumbnail of the first image as a floating control, and displays the first control and the second control to guide and control the display of the first image.

During specific implementation, in an optional implementation form, after receiving the first input, the electronic device displays, in response to the first input, a first window and a second window. The first window is displayed not as a floating control and the window is used to display the partial image; and the second window is displayed as a floating control and the window is used to display the thumbnail of the first image.

In this embodiment, after receiving the first input, the electronic device can also display the first control and the second control. The first control can switch between the first display state and the second display state, while the second control can switch between the third display state and the fourth display state. The first control and the second control have different functions in different display states.

Here, the first end and the second end may be two opposite ends in the width direction, two opposite ends in the height direction, or two opposite ends in both the width and height direction, that is, in the diagonal direction, depending on the preset condition satisfied by the first image. For example, if the width value of the first image is greater than the display width value of the display, the first end and the second end may be two opposite ends in the width direction. Here, the case in which the height value of the first image is greater than the display height value of the display, that is, the first end and the second end are two opposite ends in the height direction is taken as an example for description:

In this case, the first end can be understood as the top end of the first image and the second end can be understood as the bottom end of the first image. In a case that the first control is in the first display state, the first control is used to indicate that the currently displayed partial image is the end image at the top of the first image and there is no image content above the partial image, prompting the user to perform an input to control the partial image to switch in the direction from the first end to the second end to view the image content below the partial image. In a case that the first control is in the second display state, the first control is used to indicate that the currently displayed partial image is not the end image at the top of the first image, that is, there is image content above the partial image. The user can input on the first control to control the partial image to switch in the direction from the second end to the first end to view the image content above the partial image.

In a case that the second control is in the third display state, the second control is used to indicate that the currently displayed partial image is the end image at the bottom of the first image and there is no image content below the partial image, prompting the user to perform an input to control the partial image to switch in the direction from the second end to the first end to view the image content above the partial image. In a case that the second control is in the fourth display state, the second control is used to indicate that the currently displayed partial image is not the end image at the bottom of the first image, that is, there is image content below the partial image. The user can input on the second control to control the partial image to switch in the direction from the first end to the second end to view the image content below the partial image.

For example, as shown in FIG. 3, the partial image 20 is the end image the top of the first image. The first control 40 is in the first display state, with a single upward arrow; and the second control 50 is in the fourth display state, with a double downward arrow.

It should be understood that if the partial image is not the end image of the top of the first image, nor the end image of the bottom of the first image, the first control is in the second display state, with a double upward arrow, and the second control is in the fourth display state, with a double downward arrow. If the partial image is the end image of the bottom of the first image, the first control is in the second display state, with a double upward arrow; and the second control is in the third display state, with a single downward arrow.

In this embodiment, the thumbnail of the first image is displayed as a floating control, the first control and the second control are displayed so that the display of the thumbnail does not affect the display effect of the first image, and the flexibility and operability of viewing the complete image content of the first image can be improved by the first control and the second control.

In this embodiment of this application, optionally, after the displaying a partial image of a first image and a thumbnail of the first image, the method further includes:
receiving a fourth input; and
switching, in response to the fourth input, a partial image of the first image displayed on the current display screen from a first partial image to a second partial image, and a thumbnail region displayed in a preset display mode in a thumbnail of the first image from a first thumbnail region to a second thumbnail region; where
the second partial image is partially the same as or different from the first partial image; the first thumbnail region is a region corresponding to the first partial image in the thumbnail of the first image, and the second thumbnail region is a region corresponding to the second partial image in the thumbnail of the first image.

In this embodiment, the thumbnail region corresponding to the partial image in the thumbnail of the first image may be displayed in the preset display mode, and other regions in the thumbnail of the first image may be displayed in a display mode different from the preset display mode, prompting the user of the position of the partial image currently displayed in the first image. The thumbnail region displayed in the preset display mode may change with the image content of the currently displayed partial image.

During specific implementation, the fourth input is used to switch the partial image displayed in the current display screen. The fourth input may be a slide input applied to the partial image; the fourth input may also be a tap input applied to the first control or the second control; and the fourth input may also be a tap or slide input applied to the thumbnail of the first image. It should be understood that the implementation form of the fourth input is not limited to this, and may be determined according to the actual situation, which is not limited in the embodiments of this application.

The preset display mode may include three implementation forms: the first one: displaying a preset border, such as a highlighted rectangular border, at the edge of the thumbnail region corresponding to the partial image; the second one: displaying a preset logo, such as a linear cursor or a circular cursor, on the thumbnail region corresponding to the partial image; and the third one: enlarging the thumbnail region corresponding to the partial image. It should be understood that the implementation form of the preset display mode is not limited to this, and may be determined according to the actual situation, which is not limited in the embodiments of this application.

In this embodiment of this application, optionally, after the displaying a partial image of a first image and a thumbnail of the first image, the method further includes:
receiving a second input;
determining, in response to the second input, a to-be-edited region in the first image and marking the to-be-edited region in the first image; and
editing the to-be-edited region.

In this embodiment, since the current display screen displays a partial image of the first image and a thumbnail of the first image, the user can select the to-be-edited region by performing the second input while viewing the first image, and then edit the to-be-edited region. This simplifies user operations and improves the efficiency of image editing as there is no need to zoom in or out on the first image to view the to-be-edited region.

During specific implementation, optionally, the receiving a second input includes:
receiving a second input for the partial image, where the to-be-edited region includes an image region in the partial image corresponding to the second input; or
receiving a second input for the thumbnail of the first image, where the second input is used to determine a first thumbnail region in the thumbnail of the first image, and the to-be-edited region includes an image region in the first image corresponding to the first thumbnail region.

Here, in a first optional implementation form, the receiving a second input includes:
receiving a second input for the partial image, where the to-be-edited region includes an image region in the partial image corresponding to the second input.

In this implementation form, the second input is an input applied to the partial image. When a user intends to edit the partial image while viewing the partial image, the user can perform the second input on the partial image. The electronic device may determine the image region on which the second input is applied as the to-be-edited region.

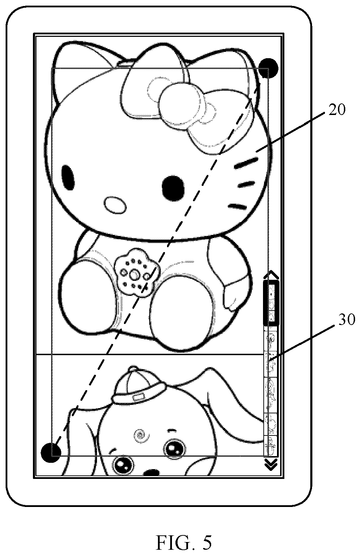

During specific implementation, the second input may be any form of input that is applied to the partial image, such as a tap input, slide input, press input, and the like, or a gesture input that includes multiple inputs. The input form of the second input may be a system-defined input form of the electronic device or an input form determined by the electronic device based on user custom settings. In an example implementation form, as shown in FIG. 5, the second input includes tap inputs applied to two positions on the partial image 20. The electronic device, in response to the second input, may determine a rectangular image region using the two position points to which the tap inputs are applied as diagonal points, and use the rectangular image region as the to-be-edited region. In another example implementation form, the second input includes a slide input applied to the partial image, and the slide input has a Z-shaped sliding trajectory. The electronic device, in response to the second input, may determine a rectangular image region using the two position points that are farthest apart in the height direction of the Z-shaped sliding trajectory, and use the rectangular image region as the to-be-edited region.

In a second optional implementation form, the receiving a second input includes:
receiving a second input for the thumbnail of the first image, where the second input is used to determine a first thumbnail region in the thumbnail of the first image, and the to-be-edited region includes an image region in the first image corresponding to the first thumbnail region.

In this implementation form, the second input is an input applied to the thumbnail of the first image. Since a user can only view a partial image of the first image on the current display screen, the second input applied to the thumbnail of the first image allows for quick determination of the to-be-edited region in the image content that is not displayed on the current screen. This eliminates the need to switch the currently displayed partial image content to determine the editing region, further reducing user operations and improving the efficiency of image editing.

During specific implementation, the input form of the second input may be a system-defined input form of the electronic device or an input form determined by the electronic device based on user custom settings. In an example implementation form, the second input includes a two-finger slide input applied to the thumbnail of the first image. The electronic device, in response to the second input, may determine a rectangular region using the end points of the two sliding trajectories of the two-finger slide input as diagonal points, and use the image region corresponding to the rectangular region in the first image as the to-be-edited region. In an example implementation form, the second input includes a double-tab input applied to the thumbnail of the first image. The electronic device, in response to the second input, may determine a rectangular region using the position point to which the double-tab is applied as the center, and use the image region corresponding to the rectangular region in the first image as the to-be-edited region.

In this embodiment, optionally, in a case that the second input is a gesture input, before the receiving a second input, the method further includes:
receiving a third input; and
determining a target gesture in response to the third input; where
the determining, in response to the second input, a to-be-edited region in the first image and marking the to-be-edited region in the first image includes:
   determining, in response to the second input, a to-be-edited region in the first image in a case that a gesture corresponding to the second input matches the target gesture; and marking the to-be-edited region in the first image.

In this optional implementation form, the third input is used to set a gesture for determining the to-be-edited region. In other words, users can customize the gesture for determining the to-be-edited region to meet the personalized needs of different users. In a case that a partial image of the first image is displayed, if the electronic device receives a gesture that matches a set target gesture, it can determine that the current user intends to determine the to-be-edited region. Thus, the to-be-edited region can be determined based on the gesture.

It should be noted that the number of the to-be-edited regions may be one or a plurality. For example, the electronic device may slide the first image to switch the currently displayed partial image. Thus, second inputs can be received when different partial images are displayed, so that a plurality of different to-be-edited regions can be determined. Alternatively, a plurality of different to-be-edited regions can also be determined when the electronic device receives a plurality of second inputs applied to different regions on the thumbnail of the first image.

After a to-be-edited region is determined, the electronic device may mark the to-be-edited region by means of a rectangular border or the like to allow the user to confirm the position of the to-be-edited region. When receiving an editing operation on the to-be-edited region from the user, actions such as doodling, adding borders, adding text, applying filters, and applying beauty effects can be performed on the to-be-edited region. Refer to the related art for the specific implementation of the editing operations. Details are not described herein.

Optionally, the editing the to-be-edited region includes:
displaying a first editing screen in a case that one to-be-edited region is determined in the first image, where the first editing screen includes an image corresponding to the to-be-edited region; and editing the image corresponding to the to-be-edited region; or
displaying a second editing screen in a case that a plurality of to-be-edited regions are determined in the first image, where the second editing screen includes a second image and the second image is an image obtained by stitching images corresponding to the plurality of to-be-edited regions; and editing the second image.

In this optional implementation form, in a case that only one to-be-edited region is determined, the electronic device may display the image corresponding to the to-be-edited region directly on the editing screen; and in a case that a plurality of to-be-edited regions are determined, the electronic device may display the plurality of to-be-edited regions together on the editing screen. For example, the plurality of to-be-edited regions can be displayed side by side in a grid layout or be displayed after stitching. Thus, in the editing mode, this eliminates the need for users to slide or zoom in on the first image to individually locate the to-be-edited regions, further improving the efficiency of image editing.

Alternatively, optionally, in a case that a plurality of to-be-edited regions are determined in the first image, and the plurality of to-be-edited regions include a first to-be-edited region and a second to-be-edited region, the editing the to-be-edited region includes:
displaying a third editing screen, where the third editing screen includes an image corresponding to the first to-be-edited region and a thumbnail of the first image, the thumbnail of the first image includes a plurality of position markers, and one position marker is associated with one to-be-edited region and is used to mark the position of the thumbnail region corresponding to the to-be-edited region in the thumbnail of the first image;
editing the first to-be-edited region;
in a case of receiving a fifth input applied to the position marker corresponding to the second to-be-edited region, displaying, in response to the fifth input, a fourth editing screen, where the fourth editing screen includes an image corresponding to the second to-be-edited region and a thumbnail of the first image; and
editing the second to-be-edited region.

In this optional implementation form, the electronic device may mark the to-be-edited regions in the thumbnail of the first image through the position markers. Upon receiving a fifth input applied to the position marker corresponding to the second to-be-edited region, the electronic device may display the image corresponding to the second to-be-edited region. For example, the plurality of to-be-edited regions include region 1, region 2, and region 3 in the first image. When the third editing screen is displayed, the third editing screen includes the image corresponding to region 1 and a thumbnail of the first image, where the thumbnail of the first image includes position marker 1 associated with region 1, position marker 2 associated with region 2, and position marker 3 associated with region 3. When a fifth input applied to position marker 3 is received, the image displayed on the current display screen may be switched from the image corresponding to region 1 to the image corresponding to region 3. In this way, compared to displaying a plurality of to-be-edited regions simultaneously, displaying the image of a single to-be-edited region has a better display effect. In addition, when it is necessary to edit the image of the next to-be-edited region, the displayed to-be-edited image can be quickly switched through the position marker. This eliminates the need for users to slide or zoom in on the first image to individually locate the to-be-edited regions, further improving the efficiency of image editing.

Optionally, in a case that a plurality of to-be-edited regions are determined in the first image, the editing the to-be-edited region includes:
stitching the images corresponding to the plurality of to-be-edited regions to obtain a third image; or
cropping the images corresponding to the plurality of to-be-edited regions.

In this optional implementation form, in a case that a plurality of to-be-edited regions are determined in the first image, the electronic device can directly stitch or crop the plurality of to-be-edited regions without requiring the user to perform an operation, further reducing user operations and improving the efficiency of image editing.

In this embodiment of this application, optionally, after the displaying a partial image of a first image and a thumbnail of the first image, the method further includes:
identifying a target object in the partial image and marking an image region of the target object in the partial image; and
editing the image region of the target object.

In this embodiment, the electronic device can automatically recognize a target object in the first image to determine a to-be-edited region based on the target object and provide a to-be-edited region to the user. The target object may be an object such as a portrait, food, and the like in the first image. The electronic device can mark an image region of the target object by means of a rectangular box or the like, and edit the image region of the target object by using the image region of the target object as an editable region. For example, when the user needs to apply a beauty effect to portraits in the first image, the user can, based on the portraits automatically recognized by the electronic device, carry out uniform beautification processing for all the recognized portraits or select some of the portraits to carry out the beautification processing without the need for the user to find out one by one the portraits in the first image, reducing user operations and improving the efficiency of image editing.

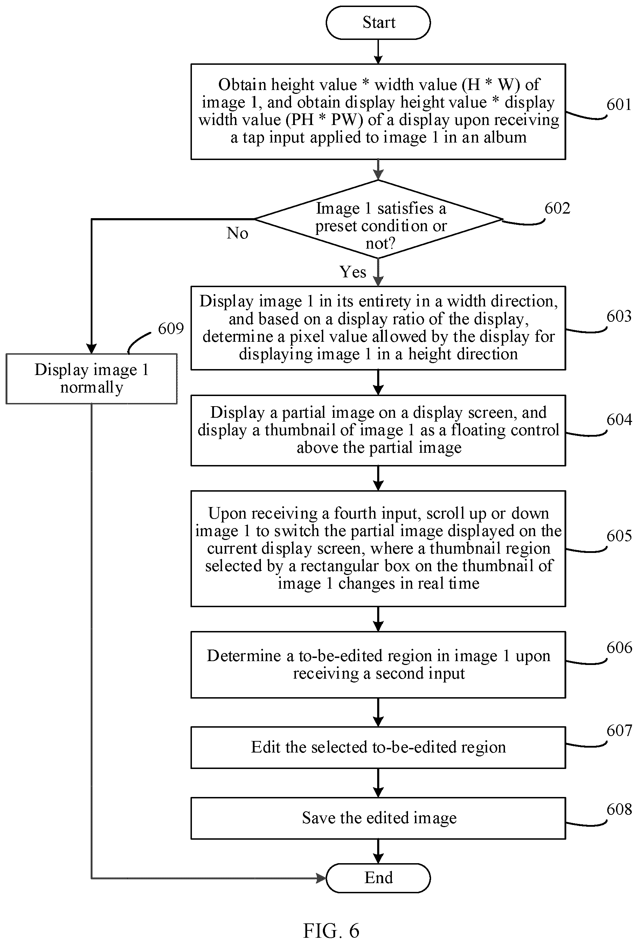

The following describes an example implementation of an embodiment of this application, as shown in FIG. 6, and the specific steps of this implementation are as follows:
Step 601: Obtain height value * width value (H * W) of image 1, and obtain display height value * display width value (PH * PW) of a display upon receiving a tap input applied to image 1 in an album.

Step 602: Determine whether image 1 satisfies a preset condition. If so, proceed to step 603; and if not, proceed to step 609.

If height value * width value of image 1 is 9865 * 3024, display height value * display width value of the display is 2376 * 1080, and the display is currently in a portrait mode, it can be determined that the display cannot display image 1 in its entirety, and that image 1 satisfies the preset condition.

Step 603: Display image 1 in its entirety in a width direction, and based on a display ratio of the display, determine a pixel value allowed by the display for displaying image 1 in a height direction.

Displaying image 1 in its entirety in the width direction means that the pixel value W' allowed by the display for displaying image 1 in the width direction is W' = 3024, and the pixel value H' allowed by the display for displaying image 1 in the height direction is H' = (PH/PW) * W' = 3024 * 2.2 = 6652.8. As a result, a partial image of 6652.8 * 3024 of the first image is displayed on the current display screen, with a partial image of 3212.2 * 3024 not displayed.

Step 604: Display the partial image on the display screen, and display a thumbnail of image 1 as a floating control above the partial image.

As shown in FIG. 3, the thumbnail 30 is displayed as a floating control on the right side of the display screen. When the thumbnail 30 is loaded for the first time, a flashing upward arrow is added to the top of the thumbnail 30 and a flashing downward arrow is added to the bottom of the thumbnail 30 to prompt the user that image 1 is not displayed in its entirety and only a partial image is shown on the current display screen. Based on the partial image 20 currently displayed on the display, the corresponding thumbnail region in the thumbnail 30 is highlighted with a rectangular box. If the partial image 20 is an end image the top of image 1, the single arrow below the thumbnail 30 is changed to a double arrow to prompt the user to perform an input to control the partial image to switch from top to bottom and view the image content not displayed below. If the partial image 20 is not an end image at the top of image 1 nor an end image at the bottom, both the single arrows above and below the thumbnail 30 are changed to double arrows to prompt the user to perform an input to control the partial image to switch from top to bottom or from bottom to top and view the image content not displayed below or above. If the partial image 20 is an end image the bottom of image 1, the single arrow above the thumbnail 30 is changed to a double arrow to prompt the user to perform an input to control the partial image to switch from bottom to top and view the image content not displayed above.

Step 605: Upon receiving a fourth input, scroll up or down image 1 to switch the partial image of image 1 displayed on the current display screen, where the thumbnail region selected by the rectangular box on the thumbnail of image 1 changes in real time.

Step 606. Determine the to-be-edited region in image 1 upon receiving a second input.

In this embodiment, the input gesture of the second input is the system default setting of the electronic device. As shown in FIG. 5, the system default input gesture is that the user presses and holds two diagonal position points above and below in the partial image 20 with fingers. Specifically, the user uses the thumb of the right hand to press and hold a position point at the lower-left corner of the partial image 20 and uses the middle finger of the right hand to press and hold a position point at the upper-right corner of the partial image 20 to select a to-be-edited region.

Step 607: Edit the selected to-be-edited region.

After selecting the to-be-edited region, the user can directly enter the editing mode. On the editing screen, the user can perform operations such as doodling, adding borders, adding text, cropping, and the like to process the editing region.

Step 608: Save the edited image.

After the edited image is saved, if there is a need to share it to a social platform, a separate image can be generated from the edited partial region for sharing, or the edited image 1 can be shared. If there is no need to share the image to the social platform, step 605 is repeated and image 1 is moved to the position corresponding to edited images.

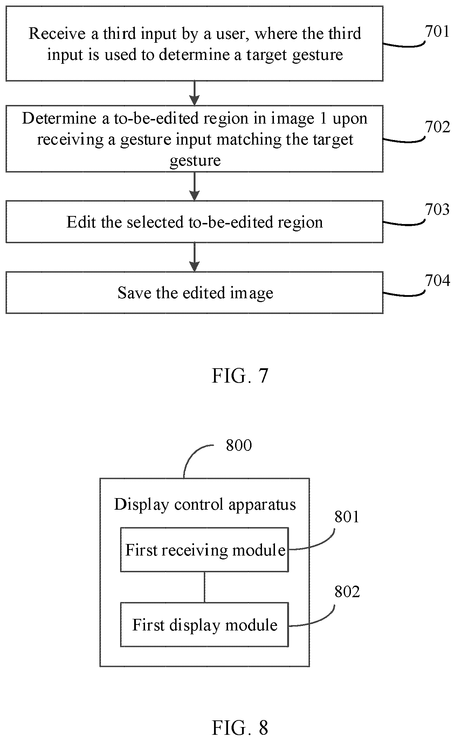

It should be noted that the input method of the second input in step 606 can also be customized by the user, as shown in FIG. 7, the specific steps are as follows:
Step 701: Receive a third input by the user, where the third input is used to determine a target gesture.

In this implementation, the input gesture of the second input is customized by the user. For example, the user first touches and holds the upper left corner of the partial image, and then slides to draw a Z-shaped arc. The to-be-edited region is obtained based on the upper and lower positions of the Z-shaped arc.

Step 702. Determine the to-be-edited region in image 1 upon receiving a gesture input matching the target gesture.

Step 703: Edit the selected to-be-edited region.

After selecting the to-be-edited region, the user can directly enter the editing mode. On the editing screen, the user can perform operations such as doodling, adding borders, adding text, cropping, and the like to process the editing region.

Step 704: Save the edited image.

After the edited image is saved, if there is a need to share it to a social platform, a separate image can be generated from the edited partial region for sharing, or the edited image 1 can be shared. If there is no need to share the image to the social platform, step 605 is repeated and image 1 is moved to the position corresponding to edited images.

In summary, in the display control method provided in embodiments of this application, upon receiving a first input, in response to the first input, the electronic device displays a partial image of the first image and a thumbnail of the first image upon determining that the first image satisfies the preset condition. Compared to displaying the first image in the form of a thumbnail, displaying a partial image of the first image allows the user to view the content of the partial image of the first image clearly without the need to zoom in on the image. Additionally, the thumbnail of the first image serves as a guide for the user to view the complete image content of the first image, simplifying user operations and enabling users to view clear image content.

It should be noted that the display control method provided in the embodiments of this application may be performed by a display control apparatus or a control module for performing the display control method in the display control apparatus. In the embodiments of this application, the display control apparatus provided in the embodiments of this application is described by using an example in which a display control apparatus performs the display control method.

Referring to FIG. 8, FIG. 8 is a structural diagram of a display control apparatus according to an embodiment of this application.

As shown in FIG. 8, the display control apparatus 800 includes:
a first receiving module 801 configured to receive a first input; and
a first display module 802 configured to display, in response to the first input, a partial image of a first image and a thumbnail of the first image upon determining that the first image satisfies a preset condition; where
the preset condition satisfied by the first image includes at least one of the following: a width value of the first image is greater than a display width value of a display; and a height value of the first image is greater than a display height value of the display.

Optionally, the thumbnail of the first image is displayed as a floating control; and the apparatus further includes:
a second display module configured to display, in response to the first input, a first control and a second control; where
in a case that the partial image is an end image of a first end of the first image, the first control is in a first display state; and in a case that the partial image is not the end image of the first end of the first image, the first control is in a second display state, and when in the second display state, the first control is used to control the partial image to switch in a direction from a second end to the first end, the first end and the second end being two opposite ends; and
in a case that the partial image is an end image of the second end of the first image, the second control is in a third display state; and in a case that the partial image is not the end image of the second end of the first image, the second control is in a fourth display state, and when in the fourth display state, the second control is used to control the partial image to switch in the direction from the first end to the second end.

Optionally, the display control apparatus 800 further includes:
a second receiving module configured to receive a second input;
a first determining module configured to determine, in response to the second input, a to-be-edited region in the first image and marking the to-be-edited region in the first image; and
a first editing module configured to edit the to-be-edited region.

Optionally, the second receiving module is specifically configured to:
receive a second input for the partial image, where the to-be-edited region includes an image region in the partial image corresponding to the second input; or
receive a second input for the thumbnail of the first image, where the second input is used to determine a first thumbnail region in the thumbnail of the first image, and the to-be-edited region includes an image region in the first image corresponding to the first thumbnail region.

Optionally, the first editing module is specifically configured to:
display a first editing screen in a case that one to-be-edited region is determined in the first image, where the first editing screen includes an image corresponding to the to-be-edited region; and edit the image corresponding to the to-be-edited region; or
display a second editing screen in a case that a plurality of to-be-edited regions are determined in the first image, where the second editing screen includes a second image and the second image is an image obtained by stitching images corresponding to the plurality of to-be-edited regions; and edit the second image.

Optionally, the display control apparatus 800 further includes:
a third receiving module configured to receive a third input;
a second determining module configured to determine a target gesture in response to the third input; where
the first determining module is specifically configured to:
   determine, in response to the second input, a to-be-edited region in the first image in a case that a gesture corresponding to the second input matches the target gesture; and mark the to-be-edited region in the first image.

Optionally, the display control apparatus 800 further includes:
an identifying module configured to identify a target object in the partial image and mark an image region of the target object in the partial image; and
a second editing module configured to edit the image region of the target obj ect.

The display control apparatus provided in embodiments of this application, upon receiving a first input, in response to the first input, displays a partial image of a first image and a thumbnail of the first image upon determining that the first image satisfies a preset condition. Compared to displaying the first image in the form of a thumbnail, displaying a partial image of the first image allows the user to view the content of the partial image of the first image clearly without the need to zoom in on the image. Additionally, the thumbnail of the first image serves as a guide for the user to view the complete image content of the first image, simplifying user operations and enabling users to view clear image content.

The display control apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The display control apparatus in this embodiment of this application may be an apparatus with an operating system. The operating system may be an Android (Android) operating system, may be an iOS operating system, or may be another possible operating system. This is not specifically limited in this embodiment of this application.

The display control apparatus provided in this embodiment of this application is capable of implementing various processes that are implemented in the method embodiments of FIG. 1 to FIG. 7. To avoid repetition, details are not described herein again.

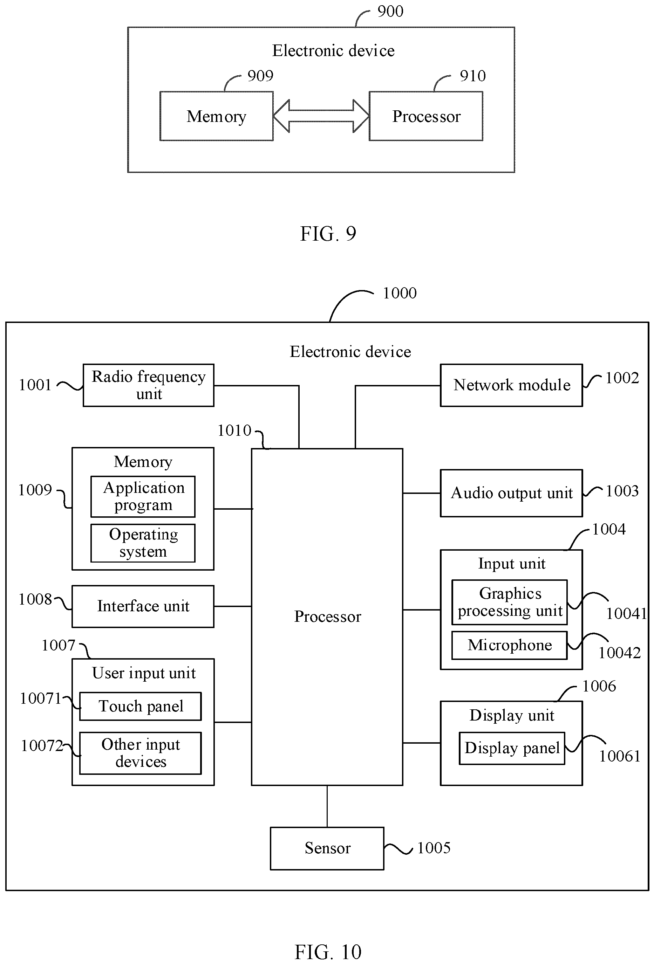

Optionally, as shown in FIG. 9, an embodiment of this application further provides an electronic device 900, including a processor 910, a memory 909, and a program or instructions stored in the memory 909 and capable of running on the processor 910, where when the program or instructions are executed by the processor 910, the processes of the foregoing display control method embodiment are implemented, with the same technical effects achieved. To avoid repetition, details are not described herein again.

It should be noted that the electronic device in this embodiment of this application includes the foregoing mobile electronic device and non-mobile electronic device.

FIG. 10 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by those skilled in the art that the electronic device 1000 may further include a power supply (for example, a battery) supplying power to the components. The power supply may be logically connected to the processor 1010 via a power management system, so that functions such as charge management, discharge management, and power consumption management are implemented via the power management system. The structure of the electronic device shown in FIG. 10 does not constitute a limitation on the electronic device. The electronic device may include more or fewer components than shown in the drawing, or combine some of the components, or arrange the components differently. Details are not described herein.

The user input unit 1007 is configured to receive a first input.

The display unit 1006 displays, in response to the first input, a partial image of a first image and a thumbnail of the first image in a case that the processor 1010 determines that the first image satisfies a preset condition; where
the preset condition satisfied by the first image includes at least one of the following: a width value of the first image is greater than a display width value of a display; and a height value of the first image is greater than a display height value of the display.

Optionally, the thumbnail of the first image is displayed as a floating control;

The display unit 1006 is further configured to display, in response to the first input, a first control and a second control; where
in a case that the partial image is an end image of a first end of the first image, the first control is in a first display state; and in a case that the partial image is not the end image of the first end of the first image, the first control is in a second display state, and when in the second display state, the first control is used to control the partial image to switch in a direction from a second end to the first end, the first end and the second end being two opposite ends; and
in a case that the partial image is an end image of the second end of the first image, the second control is in a third display state; and in a case that the partial image is not the end image of the second end of the first image, the second control is in a fourth display state; and when in the fourth display state, the second control is used to control the partial image to switch in a direction from the first end to the second end.

Optionally, the user input unit 1007 is further configured to receive a second input.

The processor 1010 is configured to determine, in response to the second input, a to-be-edited region in the first image and mark the to-be-edited region in the first image; and
The processor 1010 is further configured to edit the to-be-edited region.

Optionally, the user input unit 1007 is specifically configured to receive a second input for the partial image, where the to-be-edited region includes an image region in the partial image corresponding to the second input; or
the user input unit 1007 is specifically configured to receive a second input for the thumbnail of the first image, where the second input is used to determine a first thumbnail region in the thumbnail of the first image, and the to-be-edited region includes an image region in the first image corresponding to the first thumbnail region.

Optionally, the display unit 1006 is further configured to display a first editing screen in a case that one to-be-edited region is determined in the first image, where the first editing screen includes an image corresponding to the to-be-edited region; and the processor 1010 is specifically configured to edit the image corresponding to the to-be-edited region; or
the display unit 1006 is further configured to display a second editing screen in a case that a plurality of to-be-edited regions are determined in the first image, where the second editing screen includes a second image and the second image is an image obtained by stitching images corresponding to the plurality of to-be-edited regions; and the processor 1010 is specifically configured to edit the second image.

Optionally, the user input unit 1007 is further configured to receive a third input.

The processor 1010 is further configured to determine a target gesture in response to the third input.

The processor 1010 is specifically configured to:
determine, in response to the second input, a to-be-edited region in the first image in a case that a gesture corresponding to the second input matches the target gesture; and mark the to-be-edited region in the first image.

Optionally, the processor 1010 is further configured to identify a target object in the partial image and mark an image region of the target object in the partial image; and
edit the image region of the target object.

Upon receiving a first input, in response to the first input, the electronic device provided in embodiments of this application displays a partial image of a first image and a thumbnail of the first image upon determining that the first image satisfies a preset condition. Compared to displaying the first image in the form of a thumbnail, displaying a partial image of the first image allows the user to view the content of the partial image of the first image clearly without the need to zoom in on the image. Additionally, the thumbnail of the first image serves as a guide for the user to view the complete image content of the first image, simplifying user operations and enabling users to view clear image content.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a functional button (such as a volume control button or a power on/off button), a trackball, a mouse, and a joystick. Details are not described herein. The memory 1009 may be configured to store software programs and various data which include but are not limited to an application program and an operating system. The processor 1010 may integrate an application processor and a modem processor. The application processor mainly processes an operating system, a user interface, an application program, and the like. The modem processor mainly processes wireless communication. It can be understood that the modem processor may alternatively be not integrated in the processor 1010.

An embodiment of this application further provides a readable storage medium, where the readable storage medium stores a program or instructions, and when the program or instructions are executed by a processor, the processes of the foregoing display control method embodiments are implemented, with the same technical effects achieved. To avoid repetition, details are not described herein again.

The processor is the processor in the electronic device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

Another embodiment of this application provides a chip, where the chip includes a processor and a communications interface, the communications interface is coupled to the processor, and the processor is configured to run a program or instructions to implement the processes of the foregoing display control method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a non-volatile storage medium. When the computer program product is executed by at least one processor, the processes of the foregoing display control method embodiment are implemented, with the same technical effects achieved. To avoid repetition, details are not described herein again.

An embodiment of this application further provides an electronic device configured to perform the processes of the foregoing display control method embodiment, with the same technical effects achieved. To avoid repetition, details are not described herein.

It should be noted that in this specification, the terms "include" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A display control method, wherein the method comprises:
receiving a first input; and
displaying, in response to the first input, a partial image of a first image and a thumbnail of the first image upon determining that the first image satisfies a preset condition; wherein
the preset condition satisfied by the first image comprises at least one of the following: a width value of the first image is greater than a display width value of a display; and a height value of the first image is greater than a display height value of the display.

2. The method according to claim 1, wherein the thumbnail of the first image is displayed as a floating control; and after the receiving a first input, the method further comprises:
displaying, in response to the first input, a first control and a second control; wherein
in a case that the partial image is an end image of a first end of the first image, the first control is in a first display state; and in a case that the partial image is not the end image of the first end of the first image, the first control is in a second display state, and when in the second display state, the first control is used to control the partial image to switch in a direction from a second end to the first end, the first end and the second end being two opposite ends; and
in a case that the partial image is an end image of the second end of the first image, the second control is in a third display state; and in a case that the partial image is not the end image of the second end of the first image, the second control is in a fourth display state, and when in the fourth display state, the second control is used to control the partial image to switch in a direction from the first end to the second end.

3. The method according to claim 1, wherein after the displaying a partial image of a first image and a thumbnail of the first image, the method further comprises:
receiving a second input;
determining, in response to the second input, a to-be-edited region in the first image and marking the to-be-edited region in the first image; and
editing the to-be-edited region.

4. The method according to claim 3, wherein the receiving a second input comprises:
receiving a second input for the partial image, wherein the to-be-edited region comprises an image region in the partial image corresponding to the second input; or
receiving a second input for the thumbnail of the first image, wherein the second input is used to determine a first thumbnail region in the thumbnail of the first image, and the to-be-edited region comprises an image region in the first image corresponding to the first thumbnail region.

5. The method according to claim 3, wherein the editing the to-be-edited region comprises:
displaying a first editing screen in a case that one to-be-edited region is determined in the first image, wherein the first editing screen comprises an image corresponding to the to-be-edited region; and editing the image corresponding to the to-be-edited region; or
displaying a second editing screen in a case that a plurality of to-be-edited regions are determined in the first image, wherein the second editing screen comprises a second image and the second image is an image obtained by stitching images corresponding to the plurality of to-be-edited regions; and editing the second image.

6. The method according to claim 3, wherein in a case that the second input is a gesture input, before the receiving a second input, the method further comprises:
receiving a third input; and
determining a target gesture in response to the third input; wherein
the determining, in response to the second input, a to-be-edited region in the first image and marking the to-be-edited region in the first image comprises:
determining, in response to the second input, a to-be-edited region in the first image in a case that a gesture corresponding to the second input matches the target gesture; and marking the to-be-edited region in the first image.

7. The method according to claim 1, wherein after the displaying a partial image of a first image and a thumbnail of the first image, the method further comprises:
identifying a target object in the partial image and marking an image region of the target object in the partial image; and
editing the image region of the target object.

8. A display control apparatus, wherein the apparatus comprises:
a first receiving module configured to receive a first input; and
a first display module configured to display, in response to the first input, a partial image of a first image and a thumbnail of the first image upon determining that the first image satisfies a preset condition; wherein
the preset condition satisfied by the first image comprises at least one of the following: a width value of the first image is greater than a display width value of a display; and a height value of the first image is greater than a display height value of the display.

9. The apparatus according to claim 8, wherein the thumbnail of the first image is displayed as a floating control; and the apparatus further comprises:
a second display module configured to display, in response to the first input, a first control and a second control; wherein
in a case that the partial image is an end image of a first end of the first image, the first control is in a first display state; and in a case that the partial image is not the end image of the first end of the first image, the first control is in a second display state, and when in the second display state, the first control is used to control the partial image to switch in a direction from a second end to the first end, the first end and the second end being two opposite ends; and
in a case that the partial image is an end image of the second end of the first image, the second control is in a third display state; and in a case that the partial image is not the end image of the second end of the first image, the second control is in a fourth display state, and when in the fourth display state, the second control is used to control the partial image to switch in a direction from the first end to the second end.

10. The apparatus according to claim 8, wherein the apparatus further comprises:
a second receiving module configured to receive a second input;
a first determining module configured to determine, in response to the second input, a to-be-edited region in the first image and marking the to-be-edited region in the first image; and
a first editing module configured to edit the to-be-edited region.

11. The apparatus according to claim 10, wherein the second receiving module is specifically configured to:
receive a second input for the partial image, wherein the to-be-edited region comprises an image region in the partial image corresponding to the second input; or
receive a second input for the thumbnail of the first image, wherein the second input is used to determine a first thumbnail region in the thumbnail of the first image, and the to-be-edited region comprises an image region in the first image corresponding to the first thumbnail region.

12. The apparatus according to claim 10, wherein the first editing module is specifically configured to:
display a first editing screen in a case that one to-be-edited region is determined in the first image, wherein the first editing screen comprises an image corresponding to the to-be-edited region; and edit the image corresponding to the to-be-edited region; or
display a second editing screen in a case that a plurality of to-be-edited regions are determined in the first image, wherein the second editing screen comprises a second image and the second image is an image obtained by stitching images corresponding to the plurality of to-be-edited regions; and editing the second image.

13. The apparatus according to claim 10, wherein the apparatus further comprises:
a third receiving module configured to receive a third input; and
a second determining module configured to determine a target gesture in response to the third input; wherein
the first determining module is specifically configured to:
determine, in response to the second input, a to-be-edited region in the first image in a case that a gesture corresponding to the second input matches the target gesture; and mark the to-be-edited region in the first image.

14. The apparatus according to claim 8, wherein the apparatus further comprises:
an identifying module configured to identify a target object in the partial image and mark an image region of the target object in the partial image; and
a second editing module configured to edit the image region of the target object.

15. An electronic device, comprising a processor, a memory, and a program or instructions stored in the memory and capable of running on the processor, wherein when the program or instructions are executed by the processor, the steps of the display control method according to any one of claims 1 to 7 are implemented.

16. A readable storage medium, wherein the readable storage medium stores a program or instructions, and when the program or instructions are executed by a processor, the steps of the display control method according to any one of claims 1 to 7 are implemented.

17. A chip, comprising a processor and a communications interface, wherein the communications interface is coupled to the processor, and the processor is configured to run a program or instructions to implement the steps of the display control method according to any one of claims 1 to 7.

18. A computer program product, wherein the computer program product is stored in a non-volatile storage medium, and when the computer program product is executed by at least one processor, the steps of the display control method according to any one of claims 1 to 7 are implemented.

19. An electronic device, configured to perform the steps of the display control method according to any one of claims 1 to 7.
